# EUROPÄISCHE PATENTSCHRIFT

(11) **EP 3 453 104 B1**
(45) Veröffentlichungstag und Bekanntmachung des Hinweises auf die Patenterteilung: **21.12.2022**
(21) Anmeldenummer: 17720505.1
(22) Anmeldetag: 02.05.2017
(51) Int. Cl.: H02K 7/10, H02K 7/116

(54) **ROTIERENDE ELEKTRISCHE MASCHINE**
ROTATING ELECTRIC MACHINE
MACHINE ÉLECTRIQUE TOURNANTE

(30) Priorität: 03.05.2016 DE 102016207634
(43) Veröffentlichungstag der Anmeldung: 13.03.2019
(73) Patentinhaber: Valeo eAutomotive Germany GmbH, 91056 Erlangen (DE)
(72) Erfinder: BURKHARDT, Yves, 91056 Erlangen (DE); KIRCHNER, Eckhard, 91056 Erlangen (DE)
(74) Vertreter: Valeo Powertrain Systems
(86) Internationale Anmeldenummer: PCT/EP2017/060396
(87) Internationale Veröffentlichungsnummer: WO 2017/191124

(56) Entgegenhaltungen:
- EP-A1- 0 140 288
- WO-A1-2011/065888
- CN-A- 103 051 102
- DE-A1-102007 034 149

## Beschreibung

Die vorliegende Erfindung betrifft eine rotierende elektrische Maschine mit einem an axialen Enden jeweils einen Wicklungskopf aufweisenden Ständer und einem in einer Öffnung des Ständers drehbar gelagerten Läufer, der eine Läuferwelle und ein Läuferblechpaket aufweist, mit den Merkmalen des Oberbegriffs des Anspruchs 1.

Gattungsgemäße elektrische Maschinen sowie Ständer hierfür sind dem Grunde nach im Stand der Technik bekannt, sodass es eines gesonderten druckschriftlichen Nachweises hierfür nicht bedarf. Bei einer rotierenden elektrischen Maschine ist in der Regel ein Ständer als Stator vorgesehen, der üblicherweise eine im Wesentlichen kreisförmige Öffnung zur Aufnahme eines als Rotor ausgebildeten Läufers bereitstellt. In der Öffnung ist der Läufer drehbar gelagert angeordnet, wobei zwischen dem Läufer und dem Ständer ein Luftspalt ausgebildet ist.

Die Druckschriften WO 2011/065888 A1 und EP 0 140 288 A1 offenbaren gattungsgemäße rotierende elektrische Maschinen.

Eine ähnlich aufgebaute Elektromotor-Getriebe-Einheit ist aus der DE 10 2007 034 149 A1 bekannt.

Eine rotierende elektrische Maschine ist eine Vorrichtung, die elektrische Energie in mechanische Energie, insbesondere Bewegungsenergie (Motorbetrieb) und/oder mechanische Energie in eine elektrische Energie (Generatorbetrieb) umformt. Bei der Bewegung handelt es sich in der Regel um eine Drehbewegung, die vom Läufer ausgeführt wird. Der Ständer ist im Unterschied zum Läufer drehfest angeordnet, das heißt, bei einer Drehbewegung handelt es sich um eine Drehbewegung des Läufers gegenüber dem Ständer.

Der Ständer und der Läufer sind mittels eines magnetischen Flusses verkettet, wodurch im Motorbetrieb die Kraftwirkung, nämlich das Drehmoment, erzeugt wird, die den Läufer gegenüber dem Ständer drehend antreibt und im Generatorbetrieb dem Läufer zugeführte mechanische Energie in Form einer Drehbewegung in elektrische Energie umwandelt. Zu diesem Zweck weisen der Ständer und der Läufer jeweils eine von einem elektrischen Strom durchflossene Wicklung auf. An axialen Enden des Ständers und/oder gegebenenfalls des Läufers sind Wicklungsköpfe ausgebildet, um die Wicklung in vorgegebener Weise ausbilden zu können. Im Ständer oder im Läufer kann die Wicklung auch durch einen Permanentmagneten gebildet oder ergänzt sein.

Rotierende elektrische Maschinen der gattungsgemäßen Art sind beispielsweise Drehfeldmaschinen, die an ein mehrphasiges, insbesondere dreiphasiges, elektrisches Wechselspannungsnetz angeschlossen sind, wie beispielsweise Asynchronmaschinen, Synchronmaschinen, Synchronmaschinen mit Dämpferkäfig oder dergleichen oder auch Gleichstrommaschinen wie Nebenschlussoder Reihenschlussmaschinen oder dergleichen.

Rotierende elektrische Maschinen finden unter anderem Einsatz bei elektrisch angetriebenen Fahrzeugen wie Elektrofahrzeugen, Hybridfahrzeugen oder dergleichen. Obwohl sich elektrische Antriebe im Bereich der Kraftfahrzeuge bewährt haben, hat es sich als vorteilhaft herausgestellt, die rotierende elektrische Maschine mittels eines Getriebes an angetriebene Räder des Kraftfahrzeugs anzukoppeln, insbesondere für elektrische Antriebe in Kraftfahrzeugen, die größere Entfernungen rein elektrisch realisieren können. Mittels des Getriebes können verschiedene Funktionen bereitgestellt werden, die es ermöglichen, in einem ersten Gang eine hohe Beschleunigung und in einem anderen Gang eine hohe Endgeschwindigkeit zu erreichen. Bekannt ist es, zu diesem Zweck manuell betätigte Schaltgetriebe oder auch aus dem Bereich der Verbrennungsmaschinen bekannte automatische Getriebe hierfür einzusetzen. Dadurch ist es auch elektrisch angetriebenen Kraftfahrzeugen möglich, insbesondere im Bereich der Personenkraftfahrzeuge Geschwindigkeiten in einem Bereich von etwa 160 bis etwa 200 km/h erreichen zu können. Auch höhere Geschwindigkeiten bis zum Beispiel 250 km/h können erreicht werden.

Bei einem derartigen Einsatzbereich ist die Nutzung eines Getriebes in der Regel erforderlich, um die gewünschte Leistungsbereitstellung erreichen zu können, auch wenn die rotierende elektrische Maschine einen erheblich größeren Drehzahlbereich abzudecken vermag, als dies mit einer Verbrennungskraftmaschine möglich ist.

Der Erfindung liegt die Aufgabe zugrunde, eine gattungsgemäße rotierende elektrische Maschine sowie einen Läufer hierfür derart weiterzubilden, dass mit geringem Aufwand ein großer Drehzahlbereich, insbesondere für den Einsatz bei elektrisch angetriebenen Kraftfahrzeugen, erreicht werden kann.

Als Lösung wird mit der Erfindung eine rotierende elektrische Maschine wie in Anspruch definiert vorgeschlagen.

Weitere vorteilhafte Ausgestaltungen ergeben sich anhand von Merkmalen der abhängigen Ansprüche 2 bis 11.

In Bezug auf eine gattungsgemäße rotierende elektrische Maschine ist erfindungsgemäß vorgesehen, dass die rotierende elektrische Maschine eine Lagereinheit zum drehbaren Lagern der Läuferwelle gegenüber dem Läuferblechpaket, eine Getriebeeinheit sowie eine Kupplungseinheit aufweist, die ausgebildet ist, wenigstens zwei Kupplungszustände zum drehtechnischen Koppeln der Läuferwelle mit dem Läuferblechpaket bereitzustellen und in wenigstens einem der Kupplungszustände die Läuferwelle mittels der Getriebeeinheit mit dem Läuferblechpaket zu koppeln, wobei die Kupplungseinheit in einem der Kupplungszustände zum unmittelbaren drehtechnischen Koppeln der Läuferwelle mit dem Läuferblechpaket ausgebildet ist, wobei die Kupplungseinheit ein reibschlüssiges Kupplungselement bereitstellt, welches beispielsweise an einer der Stirnseiten des Läuferblechpakets dieses reibschlüssig koppelt, sodass die drehtechnische Kopplung zwischen der Läuferwelle und dem Läuferblechpaket hergestellt ist.

Läuferseitig wird für einen gattungsgemäßen Läufer insbesondere vorgeschlagen, dass die Lagereinheit, die Getriebeeinheit, die Kupplungseinheit und/oder eine fluidtechnische Antriebseinheit einstückig mit dem Läufer ausgebildet sind.

Die Erfindung ermöglicht es, mit der rotierenden elektrischen Maschine zugleich auch eine Getriebefunktion bereitzustellen, die es erlaubt, wenigstens zwei unterschiedliche Gänge bereitzustellen. Dies erreicht die Erfindung dadurch, dass die Läuferwelle vom Blechpaket rotationstechnisch entkoppelt ist. Die Entkopplung erreicht die Erfindung dadurch, dass die Lagereinheit vorgesehen ist, die es erlaubt, die Läuferwelle gegenüber dem Läuferblechpaket drehbar zu lagern. Zu diesem Zweck kann vorgesehen sein, dass die Lagereinheit zwischen der Läuferwelle und dem Läuferblechpaket angeordnet ist und beispielsweise hierfür geeignete Wälzkörper bereitstellt. Beispielsweise kann vorgesehen sein, dass die Wälzkörper in Form von Nadelrollen oder dergleichen vorgesehen sind. Darüber hinaus kann natürlich auch eine Gleitlagerung vorgesehen sein, um die gewünschte Lagerung bereitstellen zu können.

Vorzugsweise erstreckt sich die Lagereinheit über einen großen axialen Abschnitt des Läufers, insbesondere über die gesamte Erstreckung des Läuferblechpakets. Darüber hinaus kann aber auch vorgesehen sein, dass eine Mehrzahl von Wälzkörperlagern vorgesehen ist, die axial beabstandet zwischen dem Läuferblechpaket und der Läuferwelle angeordnet sind. Weiterhin besteht natürlich die Möglichkeit, dass die Läuferwelle und das Läuferblechpaket separat gelagert sind, beispielsweise mittels Lagerschilden, die entweder mit einem Fundament und/oder mit einem Gehäuse der rotierenden elektrischen Maschine verbunden sind. Die Getriebeeinheit weist vorzugsweise mechanische Elemente auf, die es erlauben, eine Drehzahl- beziehungsweise Drehmomentübersetzung zwischen einer Antriebswelle und einer Abtriebswelle der Getriebeeinheit bereitzustellen. Die Getriebeeinheit weist zu diesem Zweck vorzugsweise miteinander kämmende Zahnräder auf, die einerseits drehtechnisch mit dem Läuferblechpaket und andererseits mit der Läuferwelle koppelbar beziehungsweise gekoppelt sind.

Die Kopplung wird mittels der Kupplungseinheit realisiert, die wenigstens zwei Kupplungszustände aufweist. In einem ersten Kupplungszustand kann die Läuferwelle mit dem Läuferblechpaket über die Getriebeeinheit gekoppelt sein. Durch die Zwischenschaltung der Getriebeeinheit weist die Läuferwelle eine andere Drehzahl als das Läuferblechpaket auf. Die drehtechnische Verbindung erfolgt hierbei durch die Getriebeeinheit. Darüber hinaus kann die Getriebeeinheit auch zwei Abtriebswellen aufweisen, die mittels der Kupplungseinheit mit der Läuferwelle koppelbar sind und die voneinander unterschiedliche Drehzahlen bereitstellen können. Vorzugsweise sind sie wechselseitig koppelbar, sodass die Läuferwelle immer nur mit einer einzigen der Abtriebswellen der Getriebeeinheit gekoppelt ist.

Zum Zwecke des drehtechnischen Koppelns weist die Kupplungseinheit reibschlüssige Kupplungselemente auf.

Besonders vorteilhaft erweist sich der Einsatz von reibschlüssigen Kupplungselementen, die es erlauben, eine Lastschaltbarkeit zu realisieren. Hierdurch können unterschiedliche Wirkungen erreicht werden, wobei zum Beispiel in einem ersten Gang eine hohe Beschleunigung und in mindestens einem zweiten Gang eine hohe Endgeschwindigkeit erreicht werden können. Der Wechsel zwischen den Gängen kann dabei vorzugsweise ohne merkliche Reduktion der Zugkraft erfolgen.

Durch die Integration eines vorzugsweise lastschaltbaren, mindestens zweigängigen Getriebes in die rotierende elektrische Maschine kann eine einfache und kostengünstige Ausgestaltung einer rotierenden elektrischen Maschine für beliebige Antriebszwecke erreicht werden. Insbesondere kann die rotierende elektrische Maschine der Erfindung auf einfache Weise mit bereits bestehenden Getrieben in bekannten Fahrzeugkonstruktionen kombiniert werden.

Die Erfindung ist jedoch nicht auf den Einsatz von rotierenden elektrischen Maschinen bei elektrisch angetriebenen Kraftfahrzeugen beschränkt. Dem Grunde nach kann die rotierende elektrische Maschine der Erfindung ebenso bei einer Werkzeugmaschine, bei Haushaltsgeräten mit elektrischen Antrieben, bei Robotern, insbesondere in einem Produktionsbereich, bei Förderbändern, Druckmaschinen und/oder dergleichen zum Einsatz kommen. Durch die Erfindung ist es auf einfache Weise möglich, die rotierende elektrische Maschine integriert mit einem wenigstens zwei Gänge aufweisenden Getriebe auszurüsten. Dadurch wird die Flexibilität im Bereich der elektrischen Antriebe weiter erhöht. Durch die Erfindung ist es nicht nur möglich, den Aufwand für Getriebe zu reduzieren, sondern es kann sogar erreicht werden, dass externe Getriebe vollständig eingespart werden können.

Erfindungsgemäß wird vorgeschlagen, dass die Kupplungseinheit in einem der Kupplungszustände zum unmittelbaren drehtechnischen Koppeln der Läuferwelle mit dem Läuferblechpaket ausgebildet ist. In diesem Kupplungszustand ist vorzugsweise vorgesehen, dass die Läuferwelle mit dem Läuferblechpaket mit gleicher Drehzahl umläuft. Zu diesem Zweck ist vorgesehen, dass die Kupplungseinheit so ausgebildet ist, dass sie die Läuferwelle direkt mit dem Läuferblechpaket koppelt, und zwar getriebelos, das heißt, ohne die Zwischenschaltung der Getriebeeinheit. Dadurch kann die Getriebeeinheit weiter vereinfacht werden. Sie braucht in diesem Fall lediglich für einen der beiden Kupplungszustände betriebsbereit und ausgebildet zu sein. Durch das unmittelbare beziehungsweise direkte drehtechnische Koppeln der Läuferwelle mit dem Läuferblechpaket kann auf einfache Weise ein erster Gang der rotierenden elektrischen Maschine bereitgestellt werden. Zu diesem Zweck ist erfindungsgemäß vorgesehen, dass die Kupplungseinheit ein reibschlüssiges Kupplungselement bereitstellt, welches beispielsweise an einer der Stirnseiten des Läuferblechpakets dieses reibschlüssig koppelt, sodass die drehtechnische Kopplung zwischen der Läuferwelle und dem Läuferblechpaket hergestellt ist. In einer Alternative, nicht Teil der beanspruchten Erfindung ist, kann auch vorgesehen sein, dass eine Klauenkupplungseinheit vorgesehen ist, um diese Kopplung zu realisieren.

Gemäß einer weiteren Ausgestaltung wird vorgeschlagen, dass die Kupplungseinheit ausgebildet ist, einen vorgegebenen der Kupplungszustände automatisch einzunehmen. Automatisch meint hier insbesondere, dass keine Notwendigkeit besteht, extern Betätigungsenergie zuzuführen. Vorzugsweise wird der Kupplungszustand ohne Zuführen von Energie automatisch gehalten. Besonders bevorzugt ist eine Energiezuführung nur für einen Wechsel von einem Kupplungszustand in einen anderen Kupplungszustand erforderlich. Die Kupplungseinheit kann zu diesem Zweck zur Einnahme des vorgegebenen Kupplungszustands vorgespannt sein. Dies kann beispielsweise mittels eines elastischen Elements, insbesondere eines Federelements, erreicht werden. Diese Ausgestaltung erweist sich insofern als vorteilhaft, als dass auch bei gestörten Zuständen der Kupplungseinheit beziehungsweise einer Betätigungseinrichtung zum Betätigen der Kupplungseinheit ein gekoppelter Zustand zwischen der Läuferwelle und dem Läuferblechpaket bereitgestellt werden kann, sodass in jedem Fall eine Antriebsfunktion bereitgestellt werden kann. Hierdurch kann die Zuverlässigkeit in Bezug auf die rotierende elektrische Maschine weiter verbessert werden.

Eine vorteilhafte Ausgestaltung der Erfindung sieht vor, dass die Kupplungseinheit ausgebildet ist, den automatisch einzunehmenden der Kupplungszustände abhängig von einer Drehrichtung des Blechpakets einzunehmen. So kann beispielsweise vorgesehen sein, dass der automatisch einzunehmende der Kupplungszustände mittels einer Freilaufeinheit realisiert ist, sodass eine Kopplung nur in einer einzigen Drehrichtung des Läuferblechpakets erfolgt. In die andere Drehrichtung des Läuferblechpakets ist dagegen die Läuferwelle hierdurch entkoppelt. Sie kann in diesem Fall im anderen der beiden Kupplungszustände über das Getriebe gekoppelt sein.

Die Kupplungseinheit weist wenigstens zwei Kupplungszustände auf. Sie kann aber auch mehrere Kupplungszustände aufweisen, insbesondere dann, wenn die Getriebeeinheit ausgebildet ist, eine entsprechende Anzahl von Gängen bereitstellen zu können.

Besonders vorteilhaft kann die Getriebeeinheit ein Planetengetriebe aufweisen. Mittels des Planetengetriebes ist es auf einfache Weise möglich, ein hochbelastbares Getriebe bereitzustellen, mit dem die gewünschte Getriebefunktion realisiert werden kann. Zugleich ermöglicht die Nutzung eines Planetengetriebes eine Mehrzahl von unterschiedlichen Übersetzungsverhältnissen, sodass die Flexibilität hinsichtlich der Bereitstellung von unterschiedlichen Gängen erhöht ist. So kann beispielsweise vorgesehen sein, dass das Läuferblechpaket mit einem Hohlrad des Planetengetriebes verbunden ist, wohingegen ein Planetenträger des Planetengetriebes mit der Läuferwelle drehtechnisch verbunden ist. Eine Sonne des Planetengetriebes ist vorzugsweise über die Kupplungseinheit mit einem nicht drehenden Maschinenteil der rotierenden elektrischen Maschine verbindbar. Durch Koppeln der Sonne mit dem nicht rotierenden Maschinenteil kann die Sonne im gekuppelten Zustand drehtechnisch fixiert werden, sodass durch das umlaufende Läuferblechpaket und den hierdurch bewirkten entsprechenden Antrieb des Hohlrades eine drehtechnische Antriebsfunktion in Bezug auf die Läuferwelle mittels des Planetenträgers erreicht werden kann, wobei hier ein entsprechendes Übersetzungsverhältnis bereitgestellt werden kann. Ist hingegen das Läuferblechpaket im anderen Kupplungszustand direkt mit der Läuferwelle gekoppelt, ist in diesem Zustand die Kopplung der Sonne mit dem nicht drehbaren Maschinenteil aufgehoben, sodass das Planetengetriebe keine Kopplungsfunktion zwischen dem Läuferblechpaket und der Läuferwelle bewirkt. Auf diese Weise kann mit wenigen Bauelementen eine zuverlässige Realisierung einer Getriebefunktion in der rotierenden elektrischen Maschine erreicht werden. Je nach Bedarf kann natürlich auch vorgesehen sein, dass die Läuferwelle mit dem Hohlrad und das Läuferblechpaket mit dem Planetenträger drehtechnisch verbunden sind. In diesem Fall ergibt sich ein anderer Übersetzungsbereich in Bezug auf das Übersetzungsverhältnis, welches mit dem Planetengetriebe realisiert werden kann.

Weiterhin wird mit der Erfindung vorgeschlagen, dass die Getriebeeinheit und/oder die Kupplungseinheit zumindest teilweise in einem sich zwischen der Läuferwelle und wenigstens einem der Wicklungsköpfe erstreckenden Bereich angeordnet sind. Dies erlaubt es, die Kupplungseinheit und/oder die Getriebeeinheit zumindest teilweise in die rotierende elektrische Maschine zu integrieren und auf diese Weise eine einzeln handhabbare Baueinheit bereitzustellen. Insbesondere, wenn die Kupplungseinheit und/oder die Getriebeeinheit vollständig in diesem Bereich angeordnet sind, kann eine sehr kompakte Bauform erreicht werden, sodass ein vorhandenes Gehäuse oder auch sonstige Maschinenteile der rotierenden elektrischen Maschine weitgehend weiter verwendet werden können. Dadurch kann der Aufwand zur Bereitstellung der Getriebefunktion bei der rotierenden elektrischen Maschine weiter reduziert werden. Insbesondere kann die Erfindung auf diese Weise bereits bei bestehenden Konstruktionskonzepten für rotierende elektrische Maschinen auf einfache Weise nachgerüstet werden.

Eine weitere Ausgestaltung der Erfindung schlägt vor, dass die Kupplungseinheit einen in der Läuferwelle angeordneten und in eine axiale Richtung der Läuferwelle verschiebbar gelagerten Aktuator zum Betätigen der Kupplungseinheit aufweist. Der Aktuator kann beispielsweise einen Stab aufweisen, der in einer axialen Bohrung der Läuferwelle angeordnet ist. Der Aktuator kann mittels einer Antriebseinheit angetrieben sein, die vorzugsweise ebenfalls im Läufer integriert angeordnet ist. Sie kann alternativ jedoch auch zumindest teilweise läuferextern angeordnet sein. Vorzugsweise ist sie jedoch Bestandteil der rotierenden elektrischen Maschine. Der Aktuator wirkt insbesondere auf die Kupplungselemente der Kupplungseinheit, mittels denen die wenigstens zwei Kupplungszustände realisiert werden können. So kann vorgesehen sein, dass bei einem reibschlüssigen Kupplungselement eine Verschiebung in eine axiale Richtung ermöglicht wird, um beispielsweise mittels des Kupplungselements die Läuferwelle mit dem Läuferblechpaket stirnseitig unmittelbar, das heißt direkt, zu koppeln. Das gleiche kann natürlich auch für ein Kopplungselement vorgesehen sein, mittels welchem die Getriebeeinheit zwischen die Läuferwelle und dem Läuferblechpaket zwischengeschaltet werden kann. Dies erlaubt es, auf einfache Weise die Getriebefunktion und die Kupplungsfunktion zu realisieren.

Besonders vorteilhaft erweist es sich, wenn die Kupplungsfunktion an beiden stirnseitigen Enden des Läufers realisiert ist. Dadurch kann eine gute Ausnutzung eines Raumes im Bereich der Wicklungsköpfe erreicht werden, sodass eine hohe Integrationsdichte erzielt werden kann. Zu diesem Zweck kann beispielsweise ein axial verschiebbar gelagertes Blechpaket vorgesehen sein. Dies kann durch eine axial verschiebbare Blechpaketträgereinheit erreicht werden.

Eine weitere Ausgestaltung der Erfindung sieht vor, dass die rotierende elektrische Maschine eine fluidtechnische Antriebseinheit zum Antreiben des Aktuators aufweist. Die fluidtechnische Antriebseinheit kann beispielsweise eine pneumatische oder auch eine hydraulische Antriebseinheit sein. Besonders vorteilhaft eignet sich die Anwendung einer hydraulischen Antriebseinheit, insbesondere wenn die rotierende elektrische Maschine bereits eine Flüssigkeitskühlung umfasst. Auf diese Weise kann durch wenige zusätzliche Elemente eine Antriebsfunktion für die Kupplungseinheit und gegebenenfalls auch für die Getriebeeinheit, beispielsweise zum Realisieren eines Gangwechsels oder dergleichen, erreicht werden.

Vorzugsweise umfasst die fluidtechnische Antriebseinheit eine mit einem Elektromotor drehtechnisch koppelbare Fluidpumpe. Dies erlaubt es, die Funktion der Antriebseinheit unabhängig von einem Betrieb der rotierenden elektrischen Maschine bereitstellen zu können. Dies erlaubt es ferner, einen separaten Fluidkreislauf für die Antriebseinheit bereitzustellen, sodass für die Antriebseinheit geeignete Fluideigenschaften, wie beispielsweise Druck, Fluidmenge und/oder dergleichen, bereitgestellt werden können. Dadurch kann eine besonders günstige Antriebsfunktion für die Kupplungseinheit und gegebenenfalls auch für die Getriebeeinheit erreicht werden. Die Fluidpumpe ist bei einer hydraulischen Antriebseinheit vorzugsweise eine Flüssigkeitspumpe, beispielsweise eine Flügelpumpe, eine Zahnradpumpe, eine Radialpumpe und/oder dergleichen. Bei einer pneumatischen Antriebseinheit handelt es sich vorzugsweise um eine Gaspumpe, insbesondere eine Luftpumpe nach Art eines Kompressors oder dergleichen.

Ferner wird vorgeschlagen, dass die fluidtechnische Antriebseinheit ausgebildet ist, die Fluidpumpe bei dem automatisch eingenommenen Kupplungszustand von dem Elektromotor drehtechnisch zu entkoppeln. Hierdurch kann erreicht werden, dass Energie für die Antriebseinheit nur dann bereitgestellt zu werden braucht, wenn der durch die Kupplungseinheit einzunehmende Kupplungszustand dies auch erfordert. Ist beispielsweise der Kupplungszustand automatisch durch die Kupplungseinheit eingenommen, ist eine weitere Bereitstellung von Energie für die Haltung dieses Kupplungszustands nicht weiter erforderlich. Deshalb kann der weitere Antrieb der Fluidpumpe eingespart werden. Insgesamt kann dadurch ein effizienterer Betrieb der rotierenden elektrischen Maschine erreicht werden. Die drehtechnische Entkopplung kann beispielsweise dadurch realisiert werden, dass die Fluidpumpe über einen Freilauf mit dem Elektromotor drehtechnisch gekoppelt ist. Dadurch wird die Fluidpumpe lediglich dann angetrieben, wenn der Elektromotor in der entsprechenden koppelnden Drehrichtung dreht. Rotiert der Elektromotor hingegen in der entgegengesetzten Drehrichtung, entkoppelt der Freilauf den Elektromotor von der Fluidpumpe. Dadurch kann auf einfache Weise die gewünschte Kopplungsfunktion realisiert werden.

Eine Weiterbildung schlägt vor, dass die fluidtechnische Antriebseinheit ausgebildet ist, die Fluidpumpe ausschließlich während eines Betätigens der Kupplungseinheit zu betreiben. In dieser Weiterbildung braucht die Fluidpumpe nur während eines Wechsels der Kupplungszustände der Kupplungseinheit betätigt zu werden. Besonders vorteilhaft kann diese Weiterbildung vorgesehen sein, wenn eine Fluidversorgung unabhängig von einer Kühlungs- und/der Schmierungsfunktion realisiert ist. Zu diesem Zweck kann die Fluidpumpe über einen Freilauf mit dem Elektromotor verbunden sein, sodass durch Betreiben des Elektromotors in eine jeweilige Drehrichtung eine Kopplung der Fluidpumpe erreicht werden kann.

Die für die rotierende elektrische Maschine angegebenen Ausgestaltungen, Wirkungen und Vorteile sind natürlich auch mit dem Läufer für die rotierende elektrische Maschine erreichbar.

Darüber hinaus wird bezüglich des Läufers mit der Erfindung vorgeschlagen, dass die Lagereinheit, die Getriebeeinheit, die Kupplungseinheit und/oder die fluidtechnische Antriebseinheit einstückig mit dem Läufer ausgebildet sind. Dies erlaubt es, den Läufer als einzeln handhabbare Baueinheit bereitzustellen. Darüber hinaus kann eine hohe Integrationsdichte erreicht werden. Besonders vorteilhaft erweist sich dies für den Fall, dass ein bereits vorhandener Ständer genutzt werden kann, um die Erfindung zu realisieren. Ständerseitig braucht also keine Veränderung vorgenommen zu werden, um die Erfindung bei der rotierenden elektrische Maschine zu integrieren. Dies erleichtert es, die Erfindung bei bestehenden Konstruktionskonzepten für rotierende elektrische Maschinen nachzurüsten.

Weitere Vorteile und Merkmale sind der folgenden Beschreibung von Ausführungsbeispielen zu entnehmen. In den Figuren bezeichnen gleiche Bezugszeichen gleiche Merkmale und Funktionen. Die Ausführungsbeispiele dienen lediglich der Erläuterung der Erfindung und sollen diese nicht beschränken.

Es zeigen:
- FIG 1: schematisch eine Schnittansicht durch eine rotierende elektrische Maschine,
- FIG 2: eine schematische Darstellung der rotierenden Maschine gemäß FIG 1 mit dargestellten Bauräumen für eine Getriebeeinheit und eine Kupplungseinheit gemäß der Erfindung,
- FIG 3: in einer schematischen Funktionsansicht eine erste Ausgestaltung eines Läufers gemäß der Erfindung für eine rotierende elektrische Maschine gemäß FIG 1,
- FIG 4: eine schematische Funktionsdarstellung der Kupplungseinheit und der Getriebeeinheit gemäß FIG 3,
- FIG 5: in einer schematischen Funktionsansicht eine zweite Ausgestaltung eines Läufers gemäß der Erfindung für die rotierende elektrische Maschine gemäß FIG 1,
- FIG 6: eine schematische Funktionsdarstellung der Kupplungseinheit und der Getriebeeinheit gemäß FIG 5,
- FIG 7: eine schematische Darstellung eines ersten Kupplungszustands der Kupplungseinheit des Läufers gemäß FIG 5,
- FIG 8: eine schematische Darstellung eines zweiten Kupplungszustands der Kupplungseinheit des Läufers gemäß FIG 5,
- FIG 9: eine schematische Schaltbilddarstellung einer ersten Ausgestaltung für eine hydraulische Antriebseinheit zum Betätigen der Kupplungseinheit, und
- FIG 10: eine schematische Schaltbilddarstellung einer zweiten Ausgestaltung für eine hydraulische Antriebseinheit zum Betätigen der Kupplungseinheit.

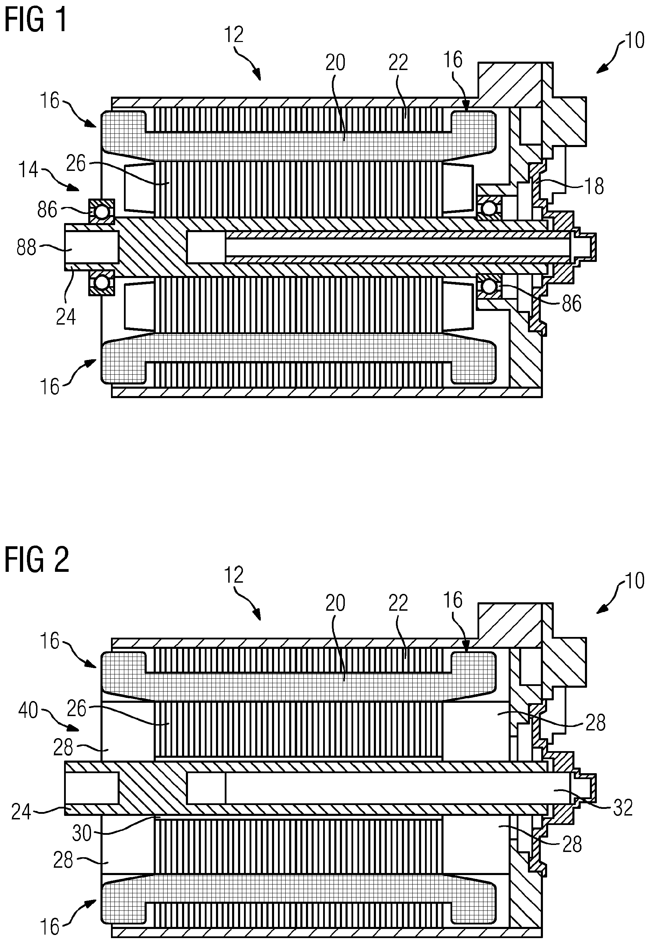

In einer schematischen Schnittansicht zeigt FIG 1 eine rotierende elektrische Maschine 10 mit einem Ständer 12, der eine Wicklung 20 sowie ein Ständerblechpaket 22 aufweist. An axialen Enden des Ständers 12 ist jeweils ein Wicklungskopf 16 der Wicklung 20 ausgebildet. In einer im Wesentlichen kreisförmigen Öffnung des Ständers 12 ist ein Läufer 14 drehbar gelagert. Der Läufer 14 weist eine Läuferwelle 24 und ein Läuferblechpaket 26 auf. An den axialen Enden der rotierenden elektrischen Maschine 10 sind jeweils Lagerschilde 18 angeordnet, von denen in FIG 1 lediglich der rechte Lagerschild dargestellt ist. An den Lagerschilden 18 sind Wälzlager 86 positioniert, die die Läuferwelle 24 drehbar gelagert in radialer Richtung festlegen. Mit 88 ist ein mechanischer Anschluss der Läuferwelle 24 bezeichnet, an dem eine anzutreibende Einrichtung angeschlossen werden kann.

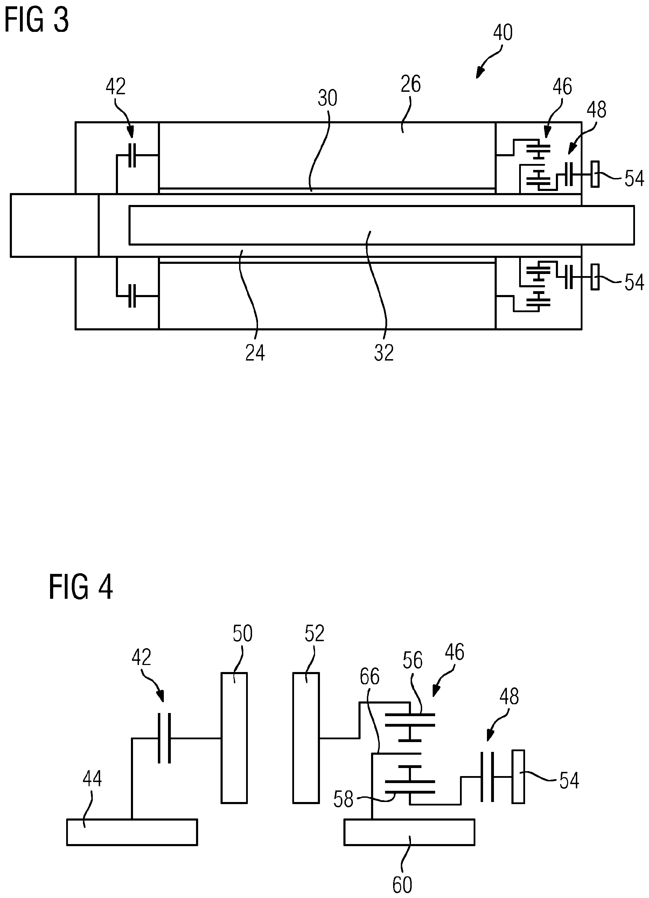

FIG 2 zeigt in einer schematischen Schnittansicht eine rotierende elektrische Maschine 10 gemäß der Erfindung, die auf der in FIG 1 dargestellten rotierenden elektrischen Maschine 10 basiert. Im Unterschied zur rotierenden elektrischen Maschine gemäß FIG 1 weist die rotierende elektrische Maschine 10 gemäß FIG 2 anstelle des Läufers 14 einen Läufer 40 auf, der ebenfalls eine Läuferwelle 24 sowie ein Läuferblechpaket 26 umfasst. Das Läuferblechpaket 26 ist hier jedoch über eine Lagereinheit 30 drehbar gegenüber der Läuferwelle 24 gelagert. Die Lagereinheit 30 umfasst vorliegend eine Mehrzahl von Wälzkörpern in Form von Nadelwalzen. Mit 28 sind Bauräume gekennzeichnet, in denen, wie im Folgenden noch erläutert werden wird, eine Getriebeeinheit 46 (FIG 3) sowie eine Kupplungseinheit 42, 48 angeordnet sind. Die Läuferwelle 24 ist vorliegend als Hohlwelle ausgebildet, wobei der Hohlraum einen Bauraum für einen Aktuator 32 bereitstellt. Die weiteren Elemente entsprechen denen, die bereits zur FIG 1 erläutert worden sind, weshalb diesbezüglich ergänzend auf die Ausführungen zur FIG 1 verwiesen wird.

FIG 3 zeigt nun eine erste Ausgestaltung für den Läufer 40 gemäß FIG 2. Aus FIG 3 ist ersichtlich, dass im linken Bereich des Läufers 40 ein erstes Kupplungselement 42 der Kupplungseinheit angeordnet ist, welches vorliegend durch eine Reibkupplung gebildet ist. Die Reibkupplung 42 ist ausgebildet, das Läuferblechpaket 26 im gekuppelten Zustand drehtechnisch mit der Läuferwelle 24 zu koppeln. Das erste Kupplungselement 42 ist mittels des Aktuators 32 zwischen einem kuppelnden und einem nicht-kuppelnden Zustand betätigbar.

Im rechten Bereich von FIG 3 ist ferner ein Planetengetriebe 46 als Getriebeeinheit dargestellt. Vorzugsweise kann eine Getriebeschmierung mittels Öl gleichzeitig zur Kühlung der elektrischen Maschine 10, insbesondere von deren Wickelköpfen 16, genutzt werden. Ferner ist das Planetengetriebe 46 mittels eines zweiten Kupplungselements 48, welches ebenfalls vorliegend als Reibkupplung ausgebildet ist, mit einem nichtrotierenden Maschinenelement 54 koppelbar. Das zweite Kupplungselement 48 ist ebenfalls zwischen einem ersten und einem zweiten Kupplungszustand umschaltbar, zu welchem Zweck es ebenfalls mit dem Aktuator 32 betätigbar ist.

Vorliegend ist vorgesehen, dass eine Betätigung mittels des Aktuators 32 wechselweise jeweils einen kuppelnden Zustand der Kupplungselemente 42, 48 bereitstellt beziehungsweise löst. Die Kupplungselemente 42, 48 sind somit - außer in einer Übergangsphase - immer wechselseitig in kuppelndem Zustand.

FIG 4 stellt eine schematische Funktionsansicht der Kupplungseinheit 42, 48 sowie des Planetengetriebes 46 dar. Im linken Bereich in FIG 4 ist die Reibkupplung 42 dargestellt. Die Reibkupplung 42 ist einerseits mit einem Verbindungselement 44 drehfest verbunden, das seinerseits drehfest mit der Läuferwelle 24 verbunden ist. Andererseits ist die Reibkupplung 42 mit einem Verbindungselement 50 drehfest verbunden, welches seinerseits drehfest mit dem Läuferblechpaket 26 verbunden ist. Im kuppelnden Zustand stellt die Reibkupplung 42 somit eine drehtechnische Kopplung zwischen dem Verbindungselement 44 und dem Verbindungselement 50 her, sodass die Läuferwelle 24 und das Läuferblechpaket 26 drehtechnisch direkt miteinander gekoppelt sind.

Im rechten Bereich der FIG 4 ist das Planetengetriebe 46 in Verbindung mit dem zweiten Kupplungselement, hier die Reibkupplung 48, dargestellt. Auch hier ist ein Verbindungselement 52 drehfest mit dem Läuferblechpaket 26 verbunden. Zugleich ist das Verbindungselement 52 drehfest mit einem Hohlrad 56 des Planetengetriebes 46 verbunden. Ein Planetenträger 66 des Planetengetriebes 46 ist drehfest mit einem Verbindungselement 60 verbunden, welches seinerseits drehfest mit der Läuferwelle 24 verbunden ist. Eine Sonne 58 des Planetengetriebes 46 ist drehfest mit einer Seite der Reibkupplung 48 verbunden, wohingegen eine andere Seite der Reibkupplung 48 mit dem Maschinenelement 54 drehfest verbunden ist. Mittels der Reibkupplung 48 kann somit die Sonne 58 im gekuppelten Zustand mit dem Maschinenelement 54 gekoppelt sein, sodass die Sonne 58 sich im gekoppelten Zustand des zweiten Kupplungselements 48 nicht dreht. In diesem Zustand überträgt sich die Drehbewegung des Blechpakets 26 über das Hohlrad 56 auf den Planetenträger 66, der seinerseits seine Drehbewegung über der Verbindungselement 60 auf die Läuferwelle 24 überträgt. Somit liegt ein Drehzahlunterschied zwischen dem Läuferblechpaket 26 und der Läuferwelle 24 vor.

In der vorliegenden Ausgestaltung ergibt sich, dass das Läuferblechpaket 26 immer die gleiche Drehrichtung wie die Läuferwelle 24 aufweist. Vorzugsweise ist nämlich das Läuferblechpaket 26 mit dem Hohlrad 56 gekoppelt und die Läuferwelle 24 mit dem Planetenträger 66, wobei die Sonne 58 fixiert ist. Dies ist vorteilhaft für die Lagerung der Läuferwelle 24, weil dadurch die Relativgeschwindigkeit zwischen dem Läuferblechpaket 26 und der Läuferwelle 24 vergleichsweise gering ist.

In dieser Ausgestaltung ergibt sich aufgrund der Verschaltung des Planetengetriebes 46 ferner, dass die Drehzahl der Läuferwelle 24 geringer als die Drehzahl des Läuferblechpakets 26 ist. Das Übersetzungsverhältnis ist vorliegend somit kleiner als 1.

Ist hingegen die Reibkupplung 48 entkoppelt, so kann sich die Sonne 58 frei drehen, sodass zwischen den Verbindungselementen 52 und 60 keine drehtechnische Kopplung über das Planetengetriebe 46 möglich ist.

Die vorliegende Ausgestaltung eignet sich somit für eine elektrische Maschine 10, die beim Anfahren ein großes Drehmoment erzeugen soll. Durch Umschalten der Kupplungseinheit 42, 48 kann somit zwischen einem gleichlaufenden Zustand, in dem die Drehzahl des Läuferblechpakets 26 und der Läuferwelle 24 gleich sind, und einem Differenzzustand, bei dem die Drehzahl des Läuferblechpakets 26 größer als die der Läuferwelle 24 ist, umgeschaltet werden. Der Drehzahlunterschied ergibt sich aufgrund der Konstruktion des Planetengetriebes 46. Durch die Ausgestaltung in Form von einer Reibkupplung ist ferner eine Umschaltung unter Last möglich. Vorliegend ist somit eine 2-Gang-Funktion bereitgestellt.

Aus den Figuren ergibt sich auch, dass das Planetengetriebe 46 sowie die Kupplungselemente 42, 48 im Wesentlichen vollständig in den Bauräumen 28 zwischen der Läuferwelle 24 und den Wicklungsköpfen 16 angeordnet sein kann. Dadurch kann die Erfindung auf einfache Weise in bestehende Konstruktionskonzepte von rotierenden elektrischen Maschinen integriert werden, wie dies anhand von den FIG 1 und 2 ersichtlich ist.

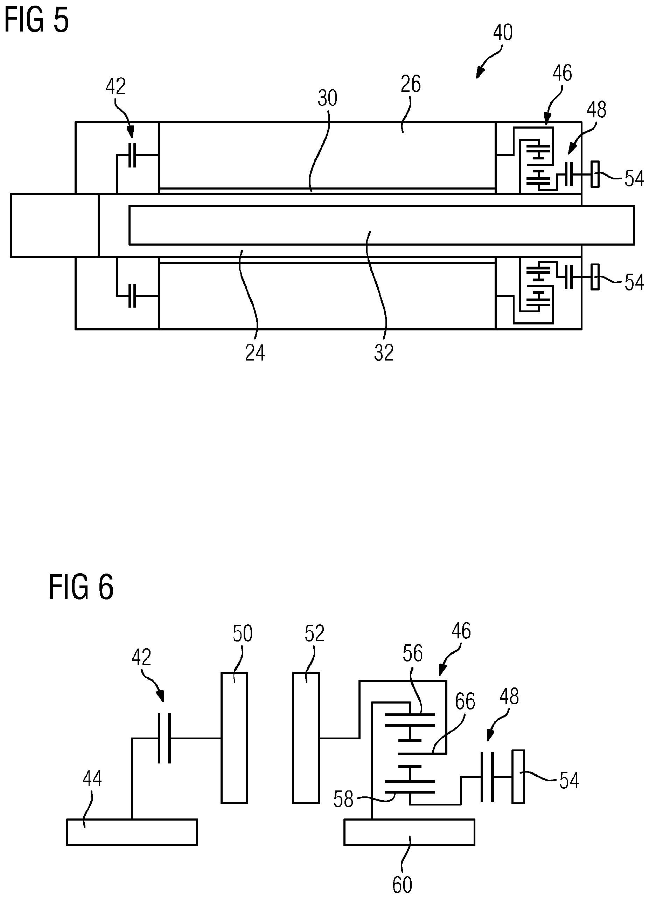

FIG 5 und 6 beziehen sich auf ein zweites Ausführungsbeispiel für den Läufer 40, welches auf dem ersten Ausführungsbeispiel gemäß der FIG 3 und 4 basiert. Infolgedessen wird ergänzend zu den Ausführungen in Bezug auf die FIG 3 und 4 verwiesen. Im Unterschied zum ersten Ausführungsbeispiel gemäß der FIG 3 und 4 ist im zweiten Ausführungsbeispiel gemäß der FIG 5 und 6 vorgesehen, dass das Planetengetriebe 46 auf andere Weise an die Läuferwelle 24 und das Läuferblechpaket 26 angeschlossen ist. Vorliegend ist vorgesehen, dass das Verbindungselement 52, welches das Läuferblechpaket 26 drehtechnisch koppelt, mit dem Planetenträger 66 drehtechnisch verbunden ist. Darüber hinaus ist das Hohlrad 56 des Planetengetriebes 46 drehfest mit dem Verbindungselement 60 verbunden, welches seinerseits mit der Läuferwelle 24 verbunden ist. Ansonsten entspricht die Ausgestaltung dieses Ausführungsbeispiels bezüglich der weiteren Komponenten dem, was bereits in Bezug auf die FIG 3 und 4 zum ersten Ausführungsbeispiel erläutert worden ist.

Die Ausgestaltung gemäß FIG 5 und 6 führt dazu, dass die Läuferwelle 24 eine höhere Drehzahl als das Läuferblechpaket 26 aufweist. Dies ergibt sich aufgrund der Funktion des Planetengetriebes 46, welches bei dieser Verschaltung ein Übersetzungsverhältnis von größer als 1 bereitstellt. Dadurch kann mittels der Läuferwelle 24 eine hohe Drehzahl erreicht werden. Bei sehr großen Drehzahlen kann darüber hinaus vorgesehen sein, dass die Lagereinheit 30 als Gleitlager ausgebildet ist. Es können jedoch auch andere Lagerelemente vorgesehen sein, um die Läuferwelle 24 gegenüber dem Läuferblechpaket 26 drehbar zu lagern.

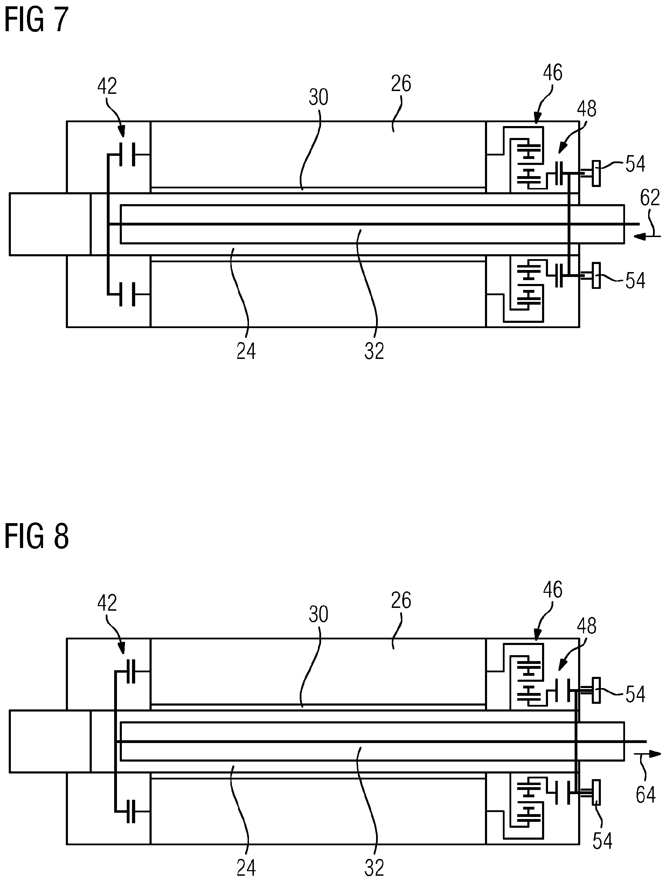

In den FIG 7 und 8 sind in Bezug auf das zweite Ausführungsbeispiel gemäß der FIG 5 und 6 zwei Schaltzustände der Kupplungseinheit 42, 48 dargestellt. In FIG 7 ist das erste Kupplungselement, nämlich die Reibkupplung 42, aufgrund einer Betätigung durch den Aktuator 32 in die axiale Richtung 62 im entkoppelten Zustand. An dieser Stelle erfolgt also keine Kopplung zwischen dem Läuferblechpaket 26 und der Läuferwelle 24. Stattdessen ist das zweite Kupplungselement, nämlich die Reibkupplung 48, im eingekuppelten Zustand, sodass die Sonne 58 über das zweite Kupplungselement 48 und das Maschinenelement 54 festgeklemmt ist und nicht rotiert. Infolgedessen ergibt sich eine drehtechnische Kopplung zwischen dem Läuferblechpaket 26 und der Läuferwelle 24 über das Planetengetriebe 46, wie es bereits zuvor zu den FIG 5 und 6 erläutert worden ist. Sowohl das erste Kupplungselement 42 als auch das zweite Kupplungselement 48 werden gleichermaßen mit dem Aktuator 32 betätigt.

FIG 8 zeigt nun einen zweiten Kupplungszustand, bei dem der Aktuator 32 in Richtung 64 axial verschoben ist. Dadurch ist das erste Kupplungselement 42 nunmehr im kuppelnden Zustand und koppelt das Läuferblechpaket 26 unmittelbar mit der Läuferwelle 24, sodass diese gemeinsam mit der gleichen Drehzahl rotieren. Zugleich ist das zweite Kupplungselement 48 im entkuppelten Zustand, sodass die Sonne 58 frei rotieren kann. Infolgedessen ergibt sich keine Kupplung über das Planetengetriebe 46 zwischen der Läuferwelle 24 und dem Läuferblechpaket 26.

Lediglich durch axiale Betätigung des Aktuators 32 kann somit zwischen den beiden Kupplungszuständen, wie sie in den FIG 7 und 8 dargestellt sind, umgeschaltet werden. Durch geeignete Konstruktion der Kupplungseinheit 42, 48 kann ein Schalten unter Last bereitgestellt werden. Dies erweist sich nicht nur bei Einsatz der rotierenden elektrischen Maschine 10 bei elektrisch antreibbaren Kraftfahrzeugen als Vorteil, sondern auch bei Werkzeugmaschinen oder dergleichen, bei denen es auf ein möglichst kontinuierlich einwirkendes Drehmoment ankommt.

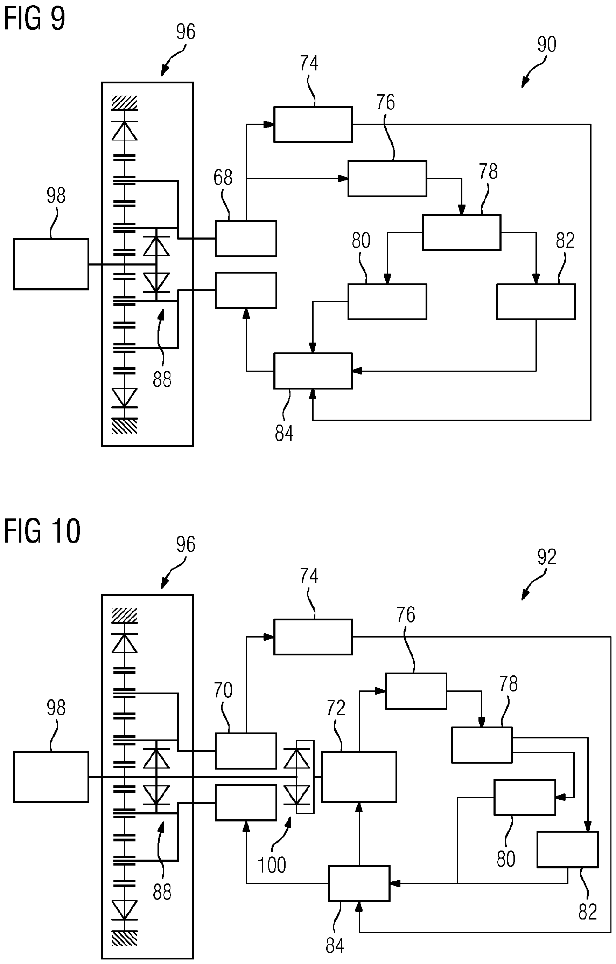

FIG 9 zeigt nun in einem schematischen hydraulischen Blockschaltbild eine erste Ausgestaltung für eine hydraulische Antriebseinheit 90. Die Antriebseinheit 90 nutzt ein bereits in der rotierenden elektrischen Maschine 10 vorhandenes hydraulisches System, welches der Kühlung und der Schmierung der rotierenden elektrischen Maschine 10 dient. Zu diesem Zweck ist eine Ölpumpe 68 als Fluidpumpe vorgesehen, die einen Schmierungs- und Kühlungskreislauf 74 mit Öl versorgt. Das durch den Schmierungs- und Kühlungskreislauf 74 strömende Öl wird in einem Reservoir 84 gesammelt und der Ölpumpe 68 wieder zugeführt.

Parallel zum Schmierungs- und Kühlungskreislauf 74 ist an die Ölpumpe 68 eine Betätigungsschaltung 76 angeschlossen. Die Betätigungsschaltung 76 ist mittels eines nicht dargestellten elektrischen Betätigungssignals aktivierbar, wobei das Betätigungssignal vorliegend zwei Signalzustände aufweist, und zwar einen Betätigungszustand und einen Ruhezustand. Diese beiden Signalzustände sind durch zwei zugeordnete Spannungspegel des Betätigungssignals repräsentiert. Das Betätigungssignal kann durch eine nicht dargestellte Steuereinrichtung bereitgestellt werden, mittels der die rotierende elektrische Maschine 10 steuerbar ist.

Die beiden Signalzustände entsprechen den beiden Kupplungszuständen der Kupplungseinheit 42, 48. Die Betätigungsschaltung 76 ist an ein 1-2-Wegeventil 78 angeschlossen, welches seinerseits an eine 1-2-Kolben-Zylinder-Anordnung 80 und an eine 2-1-Kolben-Zylinder-Anordnung 82 angeschlossen ist. Jede der beiden Kolben-Zylinder-Anordnungen 80, 82 ist ferner mit dem Reservoir 84 verbunden. Nicht dargestellte Kolben der Kolben-Zylinder-Anordnungen 80, 82 sind mit dem Aktuator 32 mechanisch verbunden, sodass aufgrund der Betätigung der Kolben-Zylinder-Anordnungen 80, 82 der Aktuator 32 zwischen zwei Endstellungen, die den Betätigungsstellungen der Kupplungseinheit 42, 48 entsprechen, betätigt werden kann.

Vorliegend ist vorgesehen, dass mittels des elektrischen Betätigungssignals die Betätigungsschaltung 76 aktiviert wird, sodass das Öl durch die Betätigungsschaltung 76 zum Wege-Ventil 78 strömt. Das Wege-Ventil 78 ist mit den Kolben-Zylinder-Anordnungen 80, 82 derart gekoppelt, dass es einer der jeweiligen Kolben-Zylinder-Anordnungen 80, 82 Öl zuführt, die den Aktuator 32 von einer aktuell eingenommenen Endstellung in die andere Endstellung verfährt. Die Ölzuführung führt dazu, dass die Kolben-Zylinder-Anordnungen 80, 82, die vorliegend miteinander gekoppelt sind, ihre Positionen verändern und damit den Aktuator 32 in die jeweilige Richtung 62, 64 verschieben. Bei einer folgenden Betätigung wird die jeweils andere der Kolben-Zylinder-Anordnungen 80, 82 mit Öl beaufschlagt, sodass der Aktuator 32 in die entgegengesetzte Richtung verfahren wird. Dadurch wird die Kupplungseinheit 42, 48 in ihren jeweiligen Kupplungszuständen umgeschaltet. Die Ölpumpe 68 ist ferner über eine Getriebeeinheit 96 an das Läuferblechpaket 26 gekoppelt. Es braucht also nur während eines Umschaltvorgangs ein Betätigungssignal auf die Betätigungsschaltung 76 einzuwirken.

Die Ölpumpe 68 ist vorliegend über eine Getriebeanordnung 96 mit einer Freilaufeinheit 88 von einem Elektromotor 98 angetrieben. Der Elektromotor 98 ist vorliegend in seine beiden möglichen Drehrichtungen betreibbar, das heißt, er kann bedarfsweise in jeweils einer der beiden Drehrichtungen angetrieben sein. Mittels der Getriebeanordnung 96 kann eine Drehzahl des Elektromotors 98 an eine für die Ölpumpe 68 geeignete Drehzahl angepasst werden. Durch die Freilaufeinheit 88 kann erreicht werden, dass die Ölpumpe 68 nur bei einer Drehrichtung des Elektromotors 98 angetrieben wird. Durch den, vorzugsweise gleichen, Betätigungszustand des Betätigungssignals kann somit jeweils von einem aktuell eingenommenen Kupplungszustand in den jeweils anderen einzunehmenden Kupplungszustand der Kupplungseinheit 42, 48 umgeschaltet werden.

FIG 10 zeigt eine zweite Ausgestaltung für eine fluidtechnische Antriebseinheit 92, die auf der Ausgestaltung der fluidtechnischen Antriebseinheit 90 basiert. Im Unterschied zur Ausgestaltung gemäß FIG 9 ist in dieser Ausgestaltung der fluidtechnischen Antriebseinheit 92 vorgesehen, dass für die Betätigung des Aktuators 32 ein eigener Ölkreislauf vorgesehen ist. Zu diesem Zweck weist die fluidtechnische Antriebseinheit, die vorliegend ebenfalls eine hydraulische Antriebseinheit 92 ist, eine Hochdruck-Ölpumpe 72 auf, die an die Betätigungsschaltung 76 angeschlossen ist. Die weiteren Elemente entsprechen denen der Ausgestaltung zur hydraulischen Antriebseinheit 90, weshalb ergänzend auf die diesbezüglichen Ausführungen verwiesen wird.

Die Hochdruck-Ölpumpe 72 ist für einen geringen Volumenstrom bei einem großen Öldruck ausgebildet. Sie ist ferner über einen Freilauf 100 an eine Niederdruck-Ölpumpe 70 angeschlossen, die zum Fördern eines großen Volumenstroms bei einem niedrigen Öldruck ausgebildet ist. Die Niederdruck-Ölpumpe 70 ist, wie zur FIG 9 bereits erläutert, an den Elektromotor 98 angeschlossen.

Die vorliegende Ausgestaltung eignet sich insbesondere für eine Konstruktion, bei der mit dem Umschalten der Drehrichtung des Elektromotors 98 der Antrieb der Hochdruck-Ölpumpe 72 aktiviert beziehungsweise deaktiviert werden kann. Dadurch wird erreicht, dass die Hochdruck-Ölpumpe 72 nur bei einer der beiden Drehrichtungen des Läuferblechpakets 26 aktiviert ist.

Mit der Erfindung ist es grundsätzlich möglich, Getriebe- und Kupplungsfunktionen auf einfache Weise in die rotierende elektrische Maschine 10 zu integrieren. Darüber hinaus erreicht die Erfindung, dass eine Lastschaltbarkeit erreicht werden kann, sodass bei einem Wechsel zwischen Gängen keine merkliche Zugkraftunterbrechung beziehungsweise Zugkraftreduktion erfasst werden kann. Durch die Integration eines insbesondere lastschaltbaren zweigängigen Getriebes in den Bauraum der elektrischen Maschine kann eine Vielzahl von elektrischen Antriebslösungen realisiert werden. Vorzugsweise lässt sich eine solche elektrische Maschine einfach mit bestehenden Getrieben in Fahrzeugantrieben kombinieren, um die Flexibilität weiter zu erhöhen. Dadurch ist es mit der Erfindung zum Beispiel bei elektrisch antreibbaren Kraftfahrzeugen auf einfache Weise möglich, die Kraftfahrzeuge auch für hohe Geschwindigkeiten auszulegen. Dabei kann insbesondere bei batterieelektrischen Fahrzeugen wie Elektrofahrzeugen, Hybridfahrzeugen und dergleichen die subjektive Wahrnehmung eines Schaltvorgangs eines Stufengetriebes durch die Tatsache beeinflusst werden, dass der elektrische Antrieb nach dem Schaltvorgang durch die Drehzahlabsenkung beim Hochschalten mehr Beschleunigung aufweist, während diese bei einem vergleichbaren Verbrennungsmotor in der Regel abfällt.

Bei Elektrofahrzeugen beziehungsweise elektrisch antreibbaren Fahrzeugen sind die Anforderungen an den Komfort bei einem Gangwechsel höher, da keine maskierenden Geräusche vorliegen und eine rotierende elektrische Maschine über einen sehr großen Drehzahlbereich ein gutes Drehmoment-Drehzahl-Verhalten aufweist. Die Erfindung trägt der Erkenntnis Rechnung, dass die rotierende elektrische Maschine in der Regel ein Getriebe benötigt, um das vorteilhafte Drehzahlniveau der rotierenden elektrischen Maschine auf eine Raddrehzahl zu reduzieren.

Für einen Stufensprung eines zweigängigen Getriebes kann ein Wert von etwa 1,5 sowohl im Hinblick auf ein möglichst großes Drehzahlband für die Ausführung des Getriebes als auch mit Blick auf eine Akzeptanz einer Zugkraftreduktion während des Schaltens als machbar und vorteilhaft anerkannte Größenordnung angesetzt werden. Bei einem größeren Stufensprung kann die Akzeptanz in Bezug auf die Zugkrafteinbuße leiden, wohingegen bei einem kleineren Stufensprung der Vorteil lediglich gering ist.

Für die Erfindung kommt es nicht darauf an, zwischen einer Lastschaltung und einer Synchronschaltung zu unterscheiden. Die Kupplungseinheit kann mittels einer entsprechenden Aktuatorik, wie zuvor erläutert, für eine lastschaltbare Variante, basierend auf reibschlüssigen Kupplungen, realisiert sein. Gleichwohl kann in einer Alternative, nicht Teil der beanspruchten Erfindung ist, auch eine formschlüssige Kupplung, wie beispielsweise eine Klauenkupplung, vorgesehen sein, wie sie beispielsweise unsynchronisiert oder auch synchronisiert bei Handschaltgetrieben oder Doppelkupplungsgetrieben vorkommt.

Die Erfindung nutzt insbesondere den Bauraum als ein Merkmal, wobei die Integration von wenigstens einer Getriebestufe in den radial zwischen der Läuferwelle 24 und den Wickelköpfen 16 liegenden Bereich vorgesehen ist. Als mögliche Übersetzungen kann bei einem Leistungsflussreduktionsgetriebe vorgesehen sein, dass ein erster Gang einen Antrieb am Hohlrad 56 und ein Abtrieb am Planetenträger 66 realisiert, wobei die Sonne 58 festgeklemmt ist. Eine Standardübersetzung kann sich also durch i = 1-1/i₀ ergeben, wodurch sich etwa ein io = - 2,5 ergeben kann. Der zweite Gang kann dann ein Direktgang sein, wie es zum zweiten Ausführungsbeispiel anhand der FIG 5 und 6 erläutert wurde.

Eine Alternative für ein Schnellganggetriebe kann vorsehen, dass der erste Gang der Direktgang ist und ein zweiter Gang einen Antrieb am Planetenträger 66 vorsieht, wohingegen ein Abtrieb am Hohlrad 56 vorgesehen ist. Auch hier ist die Sonne wieder festgeklemmt. Als Übersetzung ergibt sich i = i₀/(i₀ - 1). Eine Standardübersetzung kann beispielsweise etwa i₀ = -2,0 betragen.

Die schematische Leistungsübertragung innerhalb der zweigängigen elektrischen Maschine 10 ist unabhängig von der Art der Kupplung und deren Betätigung. Folgende Aspekte werden von der Erfindung beachtet:
- Lagerung des Läuferblechpakets 26 des Läufers 40 auf der Läuferwelle 24, wobei eine reibungsarme Lagerung eine abweichende Drehzahl von dem Läuferblechpaket 26 und der Läuferwelle 24 ermöglicht;
- umfängliche oder zumindest teilweise Integration der leistungsführenden beziehungsweise leistungswandelnden Elemente beziehungsweise Einheiten in einem Bereich radial unterhalb der Wickelköpfe 16 der rotierenden elektrischen Maschine 10;
- Nutzung einer drehsinnerhaltenden Anordnung eines Planetengetriebes 46 zur Drehzahlvariation sowohl zu einer höheren Drehzahl als auch zu einer niedrigeren Drehzahl der Läuferwelle 24;
- Nutzung eines starren Durchtriebs als Direktgang;
- umfängliche oder teilweise Integration einer Aktuatorik 32 für mindestens ein Kupplungselement 42, 48 in die Läuferwelle 24.

Es können zur Realisierung einer Lastschaltbarkeit in der Regel zwei Aktuatoren benutzt werden, mittels denen zwei reibschlüssige Kupplungen betätigt werden. Dabei ist in jedem der beiden Kupplungszustände jeweils nur einer der Aktuatoren betätigt, wohingegen der andere der Aktuatoren unbetätigt ist.

Darüber hinaus sind Kupplungseinheiten beziehungsweise Bremsen in der Regel als "Normally Open"-Systeme ausgeführt. Mit der Erfindung kann mit lediglich einem einzigen Aktuator ein System erreicht werden, welches eine "Normally Open"-Kupplung mit nur einem gleichsinnig wirkenden Aktuator nutzt. Bei der Betätigungsstrategie kann zwischen zwei Zuständen unterschieden werden, und zwar einem "Natural State" und einem "Actuated State". Beide Zustände sollen als solche im Kleinen stabil konstruktiv ausgeführt sein. Die Unterscheidung zielt darauf, dass das Erreichen des "Actuated State" einen höheren Energieeinsatz erfordert und dass dieser nur bedingt im Kleinen geometrisch stabil zu sein braucht, während der "Natural State" mit weniger Energieeinsatz erreicht werden kann und einen größeren Stabilitätsbereich aufweist.

Natural State:
- Dieser wird bei einem Key-Off angefahren und dient der Sicherstellung des Betriebs auch bei Ausfall der Aktorik. Eine Drehzahl beziehungsweise Geschwindigkeitsbeschränkung kann notwendig sein, aber eine vollständige Weiterfahrt zur Werkstatt beziehungsweise ein Weiterbetrieb bis zur Wartung kann ermöglicht werden.
- Der Aktuator 32 hält als "Normally Closed"-System einen der Gänge, vorzugsweise den ersten Gang, eingelegt, und zwar unabhängig von der Ausführungsform. In diesem Zustand ist keine Leistungsaufnahme für das Halten dieses Zustands erforderlich, weil eine mechanische Verriegelung vorliegt, beispielsweise mittels eines Rastierelements und/oder eines Formschlusses.

Actuated State:
- Eine metastabile Konfiguration mit mechanischer Verriegelung über einen reinen Kraftschluss beziehungsweise Reibschluss. Das Auslegen erfolgt über einen "kleinen Impuls" aufgrund der metastabilen Lage, wobei eine Aktuatorkraft deutlich niedriger als bei einem Einlegen eines Ganges sein kann.
- Der Aktuator hält die "Normally Open"-Stellung am zweiten Gang betätigt, wobei eine metastabile Ausführung auch ohne aktive Aktuierung im Rahmen kleiner Störungen zuverlässig funktionieren kann.

Eine mechanisch basierte Aktuatorik ist realisierbar, wobei jedoch vorliegend eine fluidtechnische, insbesondere eine hydraulische, Aktuatorik vorgezogen wird. Das erste Ausführungsbeispiel gemäß der FIG 3 und 4 zeigt, dass mittels des Aktuators 32 zwischen dem "Natural State" und dem "Actuated State" aufgrund axialen Verschiebens gewechselt werden kann.

Vorliegend sind die Antriebseinheiten 90, 92 als hydraulische Antriebseinheiten ausgebildet. Dadurch ist nur eine Antriebseinheit für die elektrische Pumpe 68, 98 ausreichend und es wird ferner nur ein einfaches Schaltventil benötigt, um den druckbeaufschlagenden Volumenstrom in die jeweilige Kammer des Betätigungszylinders 80, 82 zu leiten. Konstruktiv kann dabei der Betätigungszylinder geometrisch aufgelöst werden, das heißt, anstelle eines konventionellen Zug-/Druck-Zylinders können zwei entgegengesetzt gerichtet wirkende einfache Druckkolben in Form der Kolben-Zylinder-Anordnungen 80, 82 vorgesehen sein.

Die Auswahl einer Betriebsart der Pumpe 68, 72 kann über eine Drehrichtung eines elektrischen Antriebsmotors 98 der Pumpe 68, 72 und ein einfaches, automatisch wirkendes Zweiganggetriebe 96 in Planetenbauweise erreicht werden. In einer Drehrichtung treibt der elektrische Antriebsmotor 98 über eine 1:1-Übersetzung die Niederdruck-Ölpumpe 70 zum Schmieren und Kühlen von integrierten Getriebeelementen und der gesamten rotierenden elektrischen Maschine 10 mit einem kombinierten Schmier- und Kühlkreislauf 74 an. Durch die beiden Schaltstellungen im Kleinen stabile Ausführung des Aktuators ist keine permanente Kühlung der Kupplungselemente 42, 48 erforderlich, sodass eine einfache, nicht geregelte Antriebssteuerung als Pumpenantrieb ausreicht.

In einer anderen Drehrichtung des elektrischen Antriebsmotors 98 kann das Getriebe 96 eine drehsinnerhaltende Übersetzung zu einer hohen Drehzahl realisieren, wodurch für einen Zeitraum eines Schaltvorgangs ein höherer Ölvolumenstrom zur Verfügung gestellt werden kann. Somit kann durch eine rein mechanische Lösung eine geregelte Pumpensteuerung vermieden werden, um den Aktuator 32 robust kühlen und betätigen zu können.

Sollte hingegen der von der Niederdruck-Ölpumpe 70 (FIG 9) bereitgestellte Öldruck nicht ausreichend sein für die Betätigung des Aktuators 32, so kann wiederum über einen einfachen Freilauf 100 in der Betätigungsdrehrichtung des Pumpenantriebs auch eine parallelgeschaltete Hochdruck-Ölpumpe 72 mit angetrieben werden, um den notwendigen hohen Betätigungsdruck zur Verfügung stellen zu können (FIG 10).

FIG 10 zeigt den schematischen Aufbau dieser komplexeren hydraulischen Steuerung, wobei gestrichelte Linien mechanische Leistungsflüsse und gepunktete Linien hydraulische Leistungsflüsse darstellen.

In den FIG 9 und 10 repräsentiert das "Dioden"-Symbol einen mechanisch wirkenden Freilauf 88, 100, bei dem nur in einer Richtung ein Drehmoment übertragen wird. Sowohl bei der Ausgestaltung gemäß FIG 9 als auch bei der Ausgestaltung gemäß FIG 10 ist vorgesehen, dass die Pumpen 68, 70, 72 trotz wechselnder Drehrichtung des elektrischen Elektromotors 98 immer im gleichen Drehsinn angetrieben werden.

Erfindungsgemäß basiert die hydraulische Antriebseinheit 90, 92 im Wesentlichen auf dem Elektromotor 98, mindestens einer Pumpe 68, 70, 72 und dem hydraulischen 1-2-Wege-Ventil 78. Das Ventil 78 leitet dabei den von der Ölpumpe 72 bereitgestellten Öldruck je nach Schaltvorgang an den jeweils richtigen der Kolben-Zylinder-Anordnungen 80, 82, mit denen die Kupplungseinheit 42, 48 analog zu einer mechanischen Betätigung betätigt werden kann.

Die in den Figuren dargestellten Ausführungsbeispiele dienen lediglich der Erläuterung der Erfindung und sind für diese im Rahmen des durch die Ansprüche definierten Schutzbereichs nicht beschränkend.

## Patentansprüche

1. Rotierende elektrische Maschine (10) mit:
- einem an axialen Enden jeweils einen Wicklungskopf (16) aufweisenden Ständer (12) und
- einem in einer Öffnung des Ständers (12) drehbar gelagerten Läufer (40), der eine Läuferwelle (24) und ein Läuferblechpaket (26) aufweist,
- einer Lagereinheit (30) zum drehbaren Lagern der Läuferwelle (24) gegenüber dem Läuferblechpaket (26),
- einer Getriebeeinheit (46),
- einer Kupplungseinheit (42, 48), die ausgebildet ist, wenigstens zwei Kupplungszustände zum drehtechnischen Koppeln der Läuferwelle (24) mit dem Läuferblechpaket (26) bereitzustellen und in wenigstens einem der Kupplungszustände die Läuferwelle (24) mittels der Getriebeeinheit (46) mit dem Läuferblechpaket (26) zu koppeln,
**dadurch gekennzeichnet, dass** die Kupplungseinheit (42, 48) in einem der Kupplungszustände zum unmittelbaren drehtechnischen Koppeln der Läuferwelle (24) mit dem Läuferblechpaket (26) ausgebildet ist, wobei die Kupplungseinheit (42, 48) ein reibschlüssiges Kupplungselement bereitstellt, welches beispielsweise an einer der Stirnseiten des Läuferblechpakets (26) dieses reibschlüssig koppelt, sodass die drehtechnische Kopplung zwischen der Läuferwelle (24) und dem Läuferblechpaket (26) hergestellt ist.

2. Rotierende elektrische Maschine nach Anspruch 1, **dadurch gekennzeichnet, dass** die Kupplungseinheit (42, 48) ausgebildet ist, einen vorgegebenen der Kupplungszustände automatisch einzunehmen.

3. Rotierende elektrische Maschine nach Anspruch 2, **dadurch gekennzeichnet, dass** die Kupplungseinheit (42, 48) ausgebildet ist, den automatisch einzunehmenden der Kupplungszustände abhängig von einer Drehrichtung des Läuferblechpakets (26) einzunehmen.

4. Rotierende elektrische Maschine nach einem der Ansprüche 1 bis 3, **dadurch gekennzeichnet, dass** die Getriebeeinheit (46) ein Planetengetriebe aufweist.

5. Rotierende elektrische Maschine nach einem der Ansprüche 1 bis 4, **dadurch gekennzeichnet, dass** die Getriebeeinheit (46) und/oder die Kupplungseinheit (42, 48) zumindest teilweise in einem sich zwischen der Läuferwelle (24) und wenigstens einem der Wicklungsköpfe (16) erstreckenden Bereich angeordnet ist.

6. Rotierende elektrische Maschine nach einem der Ansprüche 1 bis 5, **dadurch gekennzeichnet, dass** die Kupplungseinheit (42, 48) einen in der Läuferwelle (24) angeordneten und in eine axiale Richtung der Läuferwelle (24) verschiebbar gelagerten Aktuator (32) zum Betätigen der Kupplungseinheit (42, 48) aufweist.

7. Rotierende elektrische Maschine nach Anspruch 6, **gekennzeichnet durch** eine fluidtechnische Antriebseinheit (72, 76, 78, 80, 82) zum Antreiben des Aktuators (32).

8. Rotierende elektrische Maschine nach Anspruch 7, **dadurch gekennzeichnet, dass** die fluidtechnische Antriebseinheit (90, 92) eine mit einem Elektromotor (98) drehtechnisch koppelbare Fluidpumpe (72) umfasst.

9. Rotierende elektrische Maschine nach Anspruch 8, **dadurch gekennzeichnet, dass** die fluidtechnische Antriebseinheit (90, 92) ausgebildet ist, die Fluidpumpe (72) bei dem automatisch eingenommenen Kupplungszustand von dem Elektromotor (98) drehtechnisch zu entkoppeln.

10. Rotierende elektrische Maschine nach Anspruch 8 oder 9, **dadurch gekennzeichnet, dass** die fluidtechnische Antriebseinheit (92) ausgebildet ist, die Fluidpumpe (72) ausschließlich während eines Betätigens der Kupplungseinheit (42, 48) zu betreiben.

11. Rotierende Elektrische Maschine (10) nach einem der vorhergehenden Ansprüche, **dadurch gekennzeichnet, dass** die Lagereinheit (30), die Getriebeeinheit (46), die Kupplungseinheit (42, 48) und/oder die fluidtechnische Antriebseinheit (90, 92) nach Anspruch 7 einstückig mit dem Läufer (40) ausgebildet ist.

## Claims

1. Rotating electric machine (10) comprising:
- a stator (12) having a winding head (16) at each axial end and
- a rotor (40) which is rotatably mounted in an opening in the stator (12) and which has a rotor shaft (24) and a laminated rotor core (26),
- a bearing unit (30) for the rotatable mounting of the rotor shaft (24) with respect to the laminated rotor core (26),
- a transmission unit (46),
- a coupling unit (42, 48), which is designed to provide at least two coupling states for coupling the rotor shaft (24) rotationally to the laminated rotor core (26) and, in at least one of the coupling states, to couple the rotor shaft (24) to the laminated rotor core (26) by means of the transmission unit (46),
**characterized in that** in one of the coupling states, the coupling unit (42, 48) is designed to rotationally couple the rotor shaft (24) directly to the laminated rotor core (26), wherein the coupling unit (42, 48) provides a frictional coupling element which, for example, at one of the front ends of the laminated rotor core (26), couples this frictionally, so that the rotational coupling between the rotor shaft (24) and the laminated rotor core (26) is produced.

2. Rotating electric machine according to Claim 1, **characterized in that** the coupling unit (42, 48) is designed to adopt a predefined one of the coupling states automatically.

3. Rotating electric machine according to Claim 2, **characterized in that** the coupling unit (42, 48) is designed to adopt the coupling state that is to be adopted automatically depending on a direction of rotation of the laminated rotor core (26).

4. Rotating electric machine according to one of Claims 1 to 3, **characterized in that** the transmission unit (46) has a planetary gear mechanism.

5. Rotating electric machine according to one of Claims 1 to 4, **characterized in that** the transmission unit (46) and/or the coupling unit (42, 48) is/are arranged at least partly in a region extending between the rotor shaft (24) and at least one of the winding heads (16).

6. Rotating electric machine according to one of Claims 1 to 5, **characterized in that** the coupling unit (42, 48) has an actuator (32) arranged in the rotor shaft (24) and mounted such that it can be displaced in an axial direction of the rotor shaft (24) for actuating the coupling unit (42, 48).

7. Rotating electric machine according to Claim 6, **characterized by** a fluidic drive unit (72, 76, 78, 80, 82) for driving the actuator (32).

8. Rotating electric machine according to Claim 7, **characterized in that** the fluidic drive unit (90, 92) comprises a fluid pump (72) that can be coupled rotationally to an electric motor (98).

9. Rotating electric machine according to Claim 8, **characterized in that** the fluidic drive unit (90, 92) is designed to decouple the fluid pump (72) rotationally from the electric motor (98) in the automatically adopted coupling state.

10. Rotating electric machine according to Claim 8 or 9, **characterized in that** the fluidic drive unit (92) is designed to operate the fluid pump (72) exclusively during an actuation of the coupling unit (42, 48).

11. Rotating electric machine (10) according to Claim 7, **characterized in that** the bearing unit (30), the transmission unit (46), the coupling unit (42, 48) and/or the fluidic drive unit (90, 92) are formed in one piece with the rotor (40) .

## Revendications

1. Machine électrique tournante (10) comprenant :
- un stator (12) comportant une tête de bobine (16) à chaque extrémité axiale et
- un rotor (40) monté de manière rotative dans une ouverture du stator (12) et comportant un arbre de rotor (24) et un noyau feuilleté (26),
- une unité formant palier (30) destiné à supporter l'arbre de rotor (24) de manière rotative par rapport au noyau feuilleté (26),
- une unité de transmission (46),
- une unité d'accouplement (42, 48) qui est conçue pour fournir au moins deux états d'accouplement afin d'accoupler en rotation l'arbre de rotor (24) au noyau feuilleté (26) et pour accoupler dans au moins un des états d'accouplement l'arbre de rotor (24) au noyau feuilleté (26) au moyen de l'unité de transmission (46), **caractérisé en ce que** l'unité d'accouplement (42, 48) est conçue dans l'un des états d'accouplement pour accoupler en rotation l'arbre de rotor (24) directement au noyau feuilleté (26), l'unité d'accouplement (42, 48) fournissant un élément d'accouplement à friction qui accouple par friction le noyau feuilleté (26) par exemple à l'une des faces frontales de celui-ci de façon à effectuer l'accouplement en rotation entre l'arbre de rotor (24) et le noyau feuilleté (26).

2. Machine électrique tournante selon la revendication 1, **caractérisée en ce que** l'unité d'accouplement (42, 48) est conçue pour prendre automatiquement un état d'accouplement spécifié.

3. Machine électrique tournante selon la revendication 2, **caractérisée en ce que** l'unité d'accouplement (42, 48) est conçue pour prendre l'état d'accouplement automatiquement à prendre en fonction d'un sens de rotation du noyau feuilleté (26).

4. Machine électrique tournante selon l'une des revendications 1 à 3, **caractérisée en ce que** l'unité de transmission (46) comporte un train épicycloïdal.

5. Machine électrique tournante selon l'une des revendications 1 à 4, **caractérisée en ce que** l'unité de transmission (46) et/ou l'unité d'accouplement (42, 48) sont au moins partiellement disposées dans une zone qui s'étend entre l'arbre de rotor (24) et au moins une des têtes de bobine (16).

6. Machine électrique tournante selon l'une des revendications 1 à 5, **caractérisée en ce que** l'unité d'accouplement (42, 48) comporte un actionneur (32) qui est disposé dans l'arbre de rotor (24), qui est monté de manière coulissante dans une direction axiale de l'arbre de rotor (24) et qui est destiné à actionner l'unité d'accouplement (42, 48).

7. Machine électrique tournante selon la revendication 6, **caractérisée par** une unité d'entraînement fluidique (72, 76, 78, 80, 82) destinée à entraîner l'actionneur (32) .

8. Machine électrique tournante selon la revendication 7, **caractérisée en ce que** l'unité d'entraînement fluidique (90, 92) comprend une pompe à fluide (72) qui peut être accouplée en rotation à un moteur électrique (98) .

9. Machine électrique tournante selon la revendication 8, **caractérisée en ce que** l'unité d'entraînement fluidique (90, 92) est conçue pour découpler en rotation la pompe à fluide (72) du moteur électrique (98) lorsque l'état d'accouplement est pris automatiquement.

10. Machine électrique tournante selon la revendication 8 ou 9, **caractérisée en ce que** l'unité d'entraînement fluidique (92) est conçue pour actionner la pompe à fluide (72) exclusivement lors de l'actionnement de l'unité d'accouplement (42, 48).

11. Machine électrique tournante (10) selon la revendication 7, **caractérisée en ce que** l'unité formant palier (30), l'unité de transmission (46), l'unité d'accouplement (42, 48) et/ou l'unité de transmission fluidique (90, 92) selon la revendication 7 sont formées d'une seule pièce avec le rotor (40).
